# EUROPEAN PATENT SPECIFICATION

(11) **EP 1 444 455 B1**
(45) Date of publication and mention of the grant of the patent: **07.12.2005**
(21) Application number: 03715347.5
(22) Date of filing: 13.03.2003
(51) Int. Cl.: F16J 15/34, G01M 13/00

(54) **MULTIFUNCTIONAL ELECTRONIC DEVICE FOR A MECHANICAL SEAL AND CONTROL AND MANAGEMENT PROCESS REALISED BY SUCH DEVICE**
MULTIFUNKTIONALE ELEKTRONISCHE VORRICHTUNG FÜR EINE GLEITRINGDICHTUNGSANORDNUNG, STEUERUNGS- UND ÜBERWACHUNGS- PROZESS DAFÜR
DISPOSITIF ELECTRONIQUE MULTIFONCTIONS DESTINE A UN PROCEDE DE COMMANDE ET DE GESTION DE GARNITURE MECANIQUE MIS EN OEUVRE PART LEDIT DISPOSITIF

(30) Priority: 25.06.2002 IT MI20021396
(43) Date of publication of application: 11.08.2004
(73) Proprietor: TERMOELETTRONICA S.P.A., I-24052 Azzano S. Paolo, Bergamo (IT)
(72) Inventor: COMPER, Riccardo, I-24052 Azzano S. Paolo (IT)
(74) Representative: Garavelli, Paolo
(86) International application number: PCT/IT2003/000154
(87) International publication number: WO 2004/001259

(56) References cited:
- WO-A-01/40756
- US-A- 4 792 911
- US-A- 5 762 342
- US-A- 6 116 609

## Description

The present invention refers to a multifunctional electronic device for a mechanical seal. The invention further deals with a control and management process for a mechanical seal realised by said electronic device.

WO-A-0140756 discloses an electronic device with a pressure control loop, in particular a monitoring seal system that remedies upset conditions by controlling the flow rate of the buffer fluid.

US-A-4792911 discloses an apparatus for a seal oil system with a pressure control loop.

Mechanical seals are members whose purpose is preventing leakage between a rotating shaft and its housing, thereby preventing gases, steams or liquids from going out, that could also be damaging for humans and for the environment. They are used in all the world in a lot of applications. In particular they are assembled on pumps, compressors, reactor stirrers or rotating shafts, driers, pressofilters, mixers, centrifugal pumps, separators and many other process machines.

Mechanical seals are realised by coupling two surfaces or rings, a rotating one integral with a shaft and a stationary one integral with the pump or the machine in which the shaft is inserted. The rotating ring and the stationary ring are kept in contact by two combined forces: a mechanical force generated by springs and an hydraulic force generated by a fluid pressure. Sliding between the two surfaces or rings thereby occurs under a compression condition due to forces computed when designing the seal.

Mechanical seals are designed in order to virtually work without leakage and the pump or machine efficiency, its productivity and its safety depend on their integrity and correct operation. The increasing worry for operator health and for environmental protection then compels the technologic search towards safer and safer applications, that are reliable and with high performance.

The market provides a wide range of mechanical seals suitably devised for every possible application (individual, double, balanced, unbalanced, dry-operating, operating with liquid, operating under combined dry-lubricated-dry conditions, for sterile applications, for high temperatures, etc.).

In the current technologic background the present invention finds its applicability in the use of all those mechanical seals that require a pressurisation and/or a flowing. The affected industrial environments are mainly those in textile, chemical, petrochemical, pharmaceutical and food industries.

In extremely synthetically pointing out common practice and prior art, two specific application cases are referred to, deemed the most complex ones: that with double dry-operating mechanical seals and that of mechanical seals operating with liquid. These two cases could also summarise, with suitable and obvious simplifications, from both the technical and the conceptual points of view, the remaining existing applications.

In general the primary functionalities that must be taken into account are the pressurisation ones (often mandatory in every application), the flowing ones (only if required by the specific application), the monitoring of necessary conditions for a good operation (hoped, but not mandatory) and integrity checking ones (optional).

Dry-operating mechanical seals required for a correct operation a pressurisation, as a rule performed by means of nitrogen or compressed air. Many manufacturers suggest to simultaneously realise also a flowing, with the purpose of keeping sealing rings cooled, clean and lubricated. The flow rate is usually independent from the set pressurisation value.

Mechanical seals operating with liquid provide instead for the installation of an hydraulic circuit that allows pressurising and keeping a flowing within the seal through a liquid deemed suitable and compatible both with construction seal characteristics and with chemical/physical product characteristics inside the process machine (since in case of seal leakage the product could come in contact therewith). The hydraulic circuit fluid is circulated by a pump or through a siphon system that exploits the thermal differences. The hydraulic circuit fluid tank is usually pressurised with a nitrogen or compressed air head.

Mechanical seals manufacturers generally require a pressurisation of approximately 0.5ö1 bar greater than the process pressure (the one inside the machine), both in case of dry seals and in case of liquid-pressurised seals.

In the current practice, functional, diagnostics (if present) and control aspects related to a mechanical seal are partly managed through manually-configured devices and partly implemented with local automatic regulators or regulators coupled with existing automation systems provided to control the whole production plant. The limits of such situation in terms of performance are evident.

Moreover, in the prior art, the trend is towards a mechanical seal pressurisation at a constant value, set during plant design or startup and established depending on the maximum pressure that can be reached during the process or the maximum design pressure of the machine. This arrangement, rather trivial, is widely diffused because it greatly simplifies installation and realisation of a possible circuit to regulate the flow-rate (the flow-rate regulation at variable pressure is a difficulty known to the technicians).

However on many process machines the internal pressure can greatly change according to the working step, going from high vacuum situations to meaningful overpressure conditions.

For example in filters/driers (process machine dedicated to solid-liquid separation and drying) the internal machine pressure can reach 4 bars during filtering and squeezing steps, thereby requiring in these steps a mechanical seal pressurisation of at least 4.5 bars. Leaving however the seal pressurised at these values also when the internal machine pressure decreases, the surfaces in contact with the seal are forced to work under extremely severe conditions, as a consequence of the load induced by the excessive pressure difference, with presumable negative effects on seal wear and life. In fact, during drying, and therefore under maximum vacuum conditions, the mechanical seal rings of a filter/drier left pressurised at 4.5 bars, must support, neglecting the component due to springs, a load of 5.5 bars (4.5 bars overpressure plus 1 bar vacuum) instead of 0.5 design bars suggested by the manufacturer. It is then known to process operators that the drying steps (in which the machine works under vacuum) are several hours long, while the filtering and squeezing steps (in which the machine is under strong overpressure) can finish in a few tens of minutes.

Due to these facts it should be clear that a pressurisation system for a mechanical seal of the static type, with a prefixed pressure value at maximum allowable pressure, though simplifying its installation, guarantees its optimum operating conditions only for short times, forcing for the remaining time a non-optimum operating situation that can also become deleterious.

Further in the prior art, in order to perform mechanical seal flowing, manual regulating systems are employed, that are generally inaccurate, not fed-back and that do not continuously verify the actual flow-rate. This in spite of the fact that flowing accuracy and reliability has a great importance: an insufficient flow-rate implies a non-optimum seal cooling and lubrication, reducing its life and increasing its maintenance costs. On the other hand an excessive flow-rate implies a flowing fluid waste, with economic and environmental damages.

It is further pointed out that pump or machine efficiency, its productivity and above all its safety and the safety of involved operators depend on mechanical seals integrity. Possible sealing members leakage then have negative effects on the environmental impact of chemical/petrochemical applications and on production certifications and validations in pharmaceutical/food applications. The integrity check of a mechanical seal should therefore be always automated, to avoid management errors created by manual interventions, and should be systematically repeated within the normal plant operation. Where applied, the currently used systems for automatically checking the integrity are based, according to the cases, on monitoring on/off transducers such as flowmeters and level switches; such system, from the practical point of view, have been proven adequate only for detecting macroscopic leakage.

Another aspect to be taken into account is that, like all sealing members, mechanical seals are components that are subjected to wear that require periodic maintenance and replacements. Generally the service life of a mechanical seal is evaluated referring to the first installation date (or the last replacement/maintenance date) that however does not provide an accurate idea of the actual operating hours.

Still more it must be noted that, for covering the warranty conditions, the mechanical seal manufacturer obviously imposed the correct installation and the use complying with design indications. Upon breakages detected during the warranty period, there often occurs a dispute between seal supplier and user, in which this latter one is almost never able to demonstrate, or better to convince the counterpart that the mechanical seal had been correctly used.

Object of the present invention is therefore solving the above-mentioned inconveniences and in particular is realising a multifunctional electronic device for a mechanical seal that allows simplifying installation and use, in addition to guarantee optimum operating conditions with consequent advantages also as regards its maintenance.

Another object of the present invention is realising a multifunctional electronic device that allows checking, through a microprocessor, in a completely automated and in an advanced way, all operating and diagnostic conditions of a mechanical seal.

A further object of the present invention is realising a multifunctional electronic device for a mechanical seal and pointing out its control process, realised by employing the above electronic device, so that it becomes particularly reliable, simple, functional and with relatively reduced costs.

These and other objects according to the present invention are obtained by providing a multifunctional electronic device for a mechanical seal as claimed in claim 1, and a control and management process for said electronic device according to claim 24.

Further characteristics are provided in the following claims; in particular, in claims 33, 34, 35 and 36 a control and management process is disclosed as performed with said electronic device.

The features and advantages of a multifunctional electronic device for a mechanical seal and a control and management process performed with said electronic device according to the present invention will better appear from the following exemplary and non-limiting description referred to the enclosed schematic drawings in which:
- figure 1 shows a diagram of an installation, known in the current art, of a dry-operating mechanical seal;
- figure 2 shows a diagram of an installation, known in the current art, of a mechanical seal operating with liquid;
- figure 3 shows an approximate diagram of a multifunctional electronic device for a mechanical seal according to the present.invention;
- figure 4 shows a diagram of an installation of an electronic device according to the present invention in case of a dry-operating mechanical seal;
- figure 5 shows a diagram of an installation of an electronic device according to the present invention in case of a mechanical seal operating with liquid;
- figure 6 is a functional diagram that shows a control and management process realised with a multifunctional electronic device for a mechanical seal according to the teachings of the present invention.

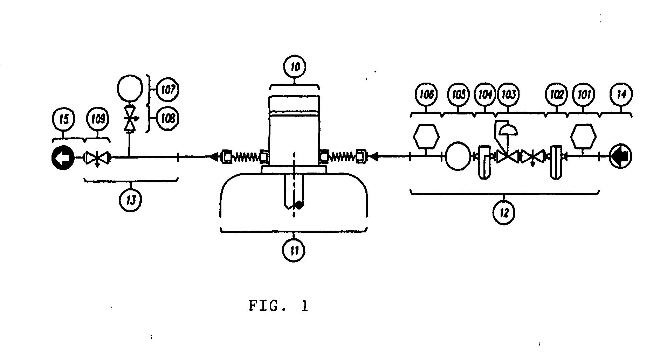

With reference to figure 1 a diagram of an installation, known in the current art, is shown for a dry-operating mechanical seal and designated with 10, assembled on a process machine designated with 11. The pressurisation of the mechanical seal 10 is realised through a pressurisation line 12 into which generally nitrogen or compressed air as pressurisation fluid 14 is inserted. The pressurisation line 12 comprises in succession a minimum pressure switch 101, a filter 102, a pressure regulator 103, a humidifier 104, a flow indicator 105 and a maximum flow-meter 106. Figure 1 also provides a return line 13 that includes both a manual vale 109, before which an on-off valve 108 is coupled, connected to a manometer 107. The on-off valve 108 is provided only for maintenance purposes and is normally open. The return line is vented towards a vent 15. The minimum pressure switch 101 is optional and generates an alarm in case of lack of fluid 14 necessary for the pressurisation. Management of this signal is usually provided by an automation system of the process plant where the mechanical seal 10 is installed. Such automation system can be based on PLC (Programmable Logic Computers) on PC (industrial computers) or on DCS (Distributed Control Systems). Filter 102, humidifier 104, manometer 107 and on-off valve 108 are optional elements, not mandatory from the functional point of view. The pressure regulator 103 is usually manually set during installation at a constant value, taking into account the maximum allowable pressure in a process machine 11 and the pressure difference imposed or suggested by the mechanical seal 10 manufacturer. The maximum flowmeter 106 is optional and should allow recognising the integrity of seal 10, supposing that in case of leakage there is an excessive fluid flow-rate in the pressurisation line 12. Management of this signal is usually performed by the automation system (PLC, PC or DCS) of the process plant where the mechanical seal 10 is installed. Flow indicator 105 and manual valve 109 are used in case also the seal 10 securing is requested. From the practical point of view, the manual valve 109 is shut during installation in order to obtain, at the pressure set by the pressure regulator 103, the desired flow-rate value suggested by the manufacturer and that can be visually verified on the flow indicator 105.

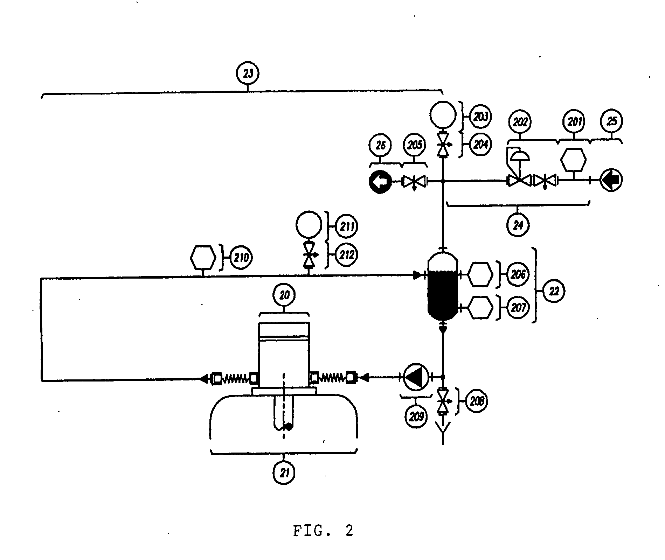

With reference to figure 2 a diagram is shown of an installation, known in the current art, of a mechanical seal operating with liquid and designated by 20, assembled on a process machine designated by 21. This installation comprises an hydraulic circuit 23 where a tank 22 is present with a suitable liquid. A pump 209, or alternatively a siphon system, re-circulate liquid through the seal 20. The circulation flow-rate can be measured by a minimum flowmeter 210. The liquid tank 22 of the hydraulic circuit 23 is pressurised with a head, generally made of nitrogen or compressed air 25, through a pressurisation line 24. The pressurisation line 24 comprises a pressure regulator 202, before which a minimum pressure switch 201 is connected. A minimum level switch 207 and a maximum level switch 207 are present on the hydraulic circuit liquid tank 22. Above the tank 22 a manometer 203 and a suitable on-off valve 204 are assembled; it is then possible to connect the tank 22 to a vent line 26 through a manual valve 205. It is possible to drain the hydraulic circuit 23 through a manual valve 208. The manual valves 205 and 208 are provided only for maintenance purposes and are normally closed. A manometer 211, equipped with a suitable on-off valve 212, allows displaying the hydraulic circuit pressure. The on-off valves 204 and 212 are provided only for maintenance purposes and are normally open. The minimum pressure switch 201 is optional and allows generating an alarm in case of lack of fluid 25 necessary for pressurisation. The management of such signal is usually performed by the automation system (PLC, PC or DCS) of the process plant where the mechanical seal 20 is installed. The pressure regulator 202 is usually manually set during installation at a constant value, taking into account the maximum allowable pressure in the process machine 21, the pressure difference imposed or suggested by the mechanical seal 20 manufacturer and possibly also the circulating pump 209 head. The manometers 203 and 211 with respective on-off valves 204 and 212 are optional. The maximum level switch 206 is optional and should allow recognising the seal integrity, supposing that in case of leakage a liquid level lowering occurs in tank 22. The minimum level switch 207 is optional and instead its function is interlocking the pump 209 operation in case liquid is missing in tank 22. The minimum flowmeter 210 is optional and is possibly used to monitor the presence of flow in the hydraulic circuit 23 when the pump 209 is operating. Signals from minimum pressure switch 201, minimum level switch 206, minimum level switch 207, circulation pump 209 and minimum flowmeter 210, if present, are usually performed by the automation system (PLC, PC or DCS) of the process system where the mechanical seal 20 is installed.

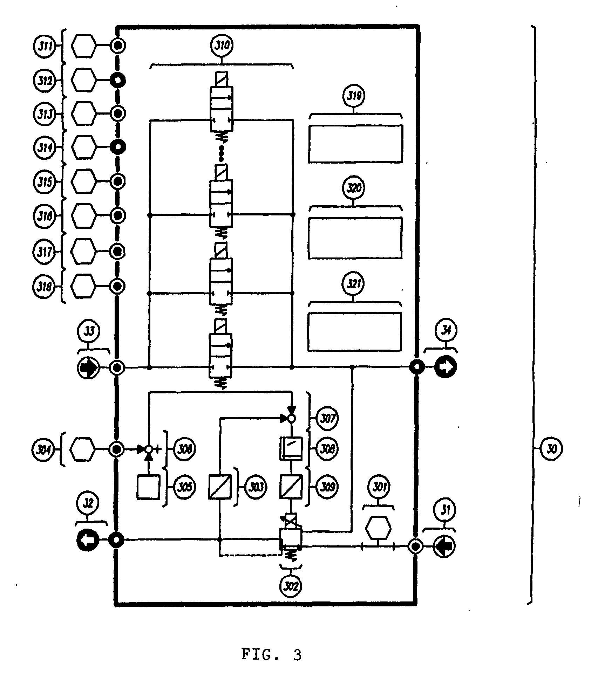

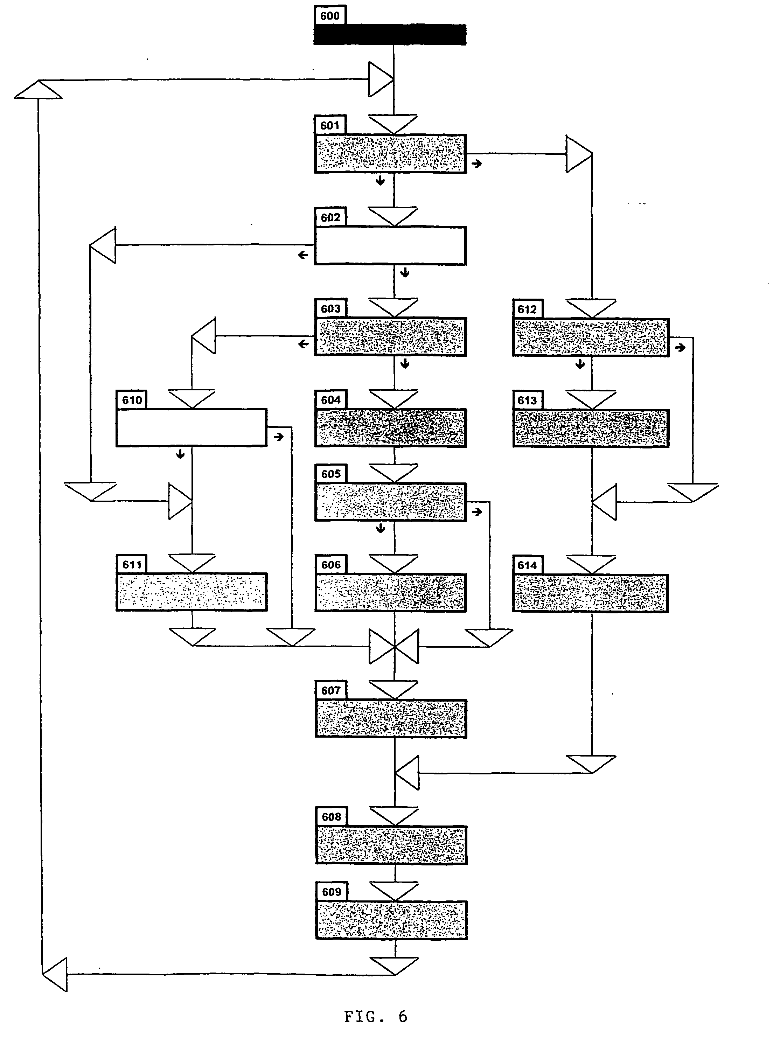

With reference to figure 3 an approximate diagram is shown of a multifunctional electronic device for a mechanical seal object of the present invention and designated by 30. The electronic device 30 is supplied by a pressure line 31 with nitrogen, compressed air or other suitable fluid. The electronic device 30 must be connected to the mechanical seal through the pressurisation line 32. The pressure in line 32 is controlled by a pressure regulating element 302, preceded by a minimum pressure switch 301. The pressure regulating element 302 is driven by a suitable converter 309 that receives commands from an regulating algorithm 308 (PID or another type). The regulating algorithm 308 receives data from a comparator 307 that compares a desired value (called setpoint), output from block 306, with a measured value, output from block 303. The setpoint value is computed with summer 306 by summing to the process pressure, detected by a pressure transmitter 304, the optimum pressure difference 305 set or suggested by the mechanical seal manufacturer. The measured value is instead detected by a suitable transducer 303. The regulating algorithm 308 can also be temporarily disabled by the microprocessor controlling the electronic device 30, making therefore possible to force a fixed configuration of the pressure regulating element 302 independently from desired and measured values output from block 307. To realise also the possible flowing independently from desired and measure values as output, a return line 33 is also provided as input to the electronic device 30, coming from the mechanical seal and connected to a vent line 34 after a passage through a multivalve 310 (flow-rate regulating element). The multivalve 310 has a series of pre-calibrated precision nozzles mutually arranged in parallel. Substantially for every nozzle the flow-rate is known a priori for every possible pressure value. Purpose of the microprocessor controlling the electronic device 30 is therefore driving the opening or closing of available nozzles depending on the variable pressure measure, detected by the transducer 303, and the desired value of the flow-rate. As an alternative to the multivalve 310 it is possible to imagine a 2-way proportional regulating valve fed-back by a flowmeter. The circuit realised with the electronic device 30, essentially composed of a pressurisation line 32 (going to the mechanical seal) and of a possible return line 33 (coming from the mechanical seal), allows also realising a sophisticated algorithm for checking the seal integrity based on the evaluation of actual pressure leakage. In practice, during the seal integrity check procedure, periodically and automatically activated, the nozzles of element 310 are temporarily forced close (thereby imposing a null flow-rate) and the maximum pressure is set in the mechanical seal through the pressure regulating element 302. Afterwards, by temporarily disabling the regulating algorithm 308, the pressure regulating element 302 is also inhibited, thereby avoiding to automatically compensate for possible pressure leakage on the pressurisation line 32. Starting from this condition, the time variation of the pressure measure measured by the transducer 303 can be evaluated in a prefixed time. Pressure leakages greater than a preset value and detected in a known time generate an alarm situation. No meaningful pressure leakage must be detected in case of a perfectly healthy mechanical seal. At the end of the integrity check and if there are no anomalies, the electronic device 30 is programmed to automatically restore the usual pressure and flow-rate regulations, as previously described. For the complete monitoring of alarms and malfunctions, the electronic device 30 is further provided for acquiring external signals coming from possible minimum level switches and flowmeters 316, 318 and maximum level switches and flowmeters 315, 317, obviously if installed and available. The electronic device 30 is also prearranged for managing other external input and output signals, necessary or useful for implementing further functionalities and for integration with other control systems. For example an input signal 311 (contact prearranged to recognise when the mechanical seal must be operating) makes it possible to automatically activate all operating and diagnostic functionalities in addition to counting and recording the actual operating hours. An output signal 312 (contact prearranged for signalling the existence of possible currently occurring alarm situations) and an input signal 313 (contact prearranged for remotely recognising and resetting possible alarm or lock situations) make it possible to integrate, with other equipment, commands and control actions of the electronic device 30. An output signal 314 (prearranged "Watch Dog" contact, managed as a frequency pulse output) makes it possible for other equipment to monitor the correct operation of the electronic device 30. The electronic device 30 object of the present invention is further equipped with a display 319 and a keyboard 320 for reconfiguring operating parameters and for displaying all available current and historical data, in addition to a solid-state mass storage 321 for recording them. The minimum pressure switch 301 allows generating an alarm in case of lack of the minimum pressure necessary for pressurisation. The pressure regulation element 302 can be a 3-way proportional valve or, alternatively, can be realised by using and integrating two 2-way proportional valves, one in order to be able to increase pressure in output line 32 through a divided connection to line 31, the other one to decrease it through a divided connection to vent 34. The transducer 303 measures the line 32 output pressure from the electronic device 30 that, once installed, can be assumed corresponding to the pressure inside the mechanical seal. The pressure transmitted 304 is able to detect the pump delivery line pressure or the pressure inside the process machine in which the mechanical seal is assembled. The element 306 plays the role of summing the process pressure 304 measure with the optimum pressure difference 305. The comparator 307 is able to compare the setpoint value, output from the element 306, with the pressure value inside the mechanical seal measured by the transducer 303. The algorithm 308, depending on the proportional, integral or derivative (or of other types) component of the error between measure and setpoint, decides how the pressure regulating element 302 can be controlled. The converter 309 is used for electrically driving the pressure regulating element 302. After connection of line 32 to mechanical seal, the electronic device 30 takes then care, through components 302, 303, 304, 305, 306, 307, 308 and 309, to keep the pressure 303 of the pressurisation line 32 regulated (namely the pressure in the mechanical seal) to a value depending on process pressure 304 (namely the pump delivery line pressure or the pressure inside the process machine in which the seal is installed), thereby guaranteeing an optimum pressure difference 305 set or suggested by the mechanical seal manufacturer. The possible flowing is instead regulated by driving the element 310 depending on the current pressure measure 303. During the integrity check procedure, the above elements are instead temporarily managed according to a different control logic as already described: flowing disabling, pressurisation, pressure regulation disabling and following pressure leakage evaluation. The elements 31, 33, 304, 311, 313, 315, 316, 317 and 318 are inputs to the electronic device 30. The elements 32, 34, 312 and 314 are outputs from the electronic device 30. The components 301, 302, 303, 304, 305, 306, 307, 308, 310, 311, 312, 313, 314, 315, 316, 317, 318, 319, 320 and 321 are directly controlled and managed by the electronic device 30 microprocessor through the control and management process shown in figure 6 and explained below.

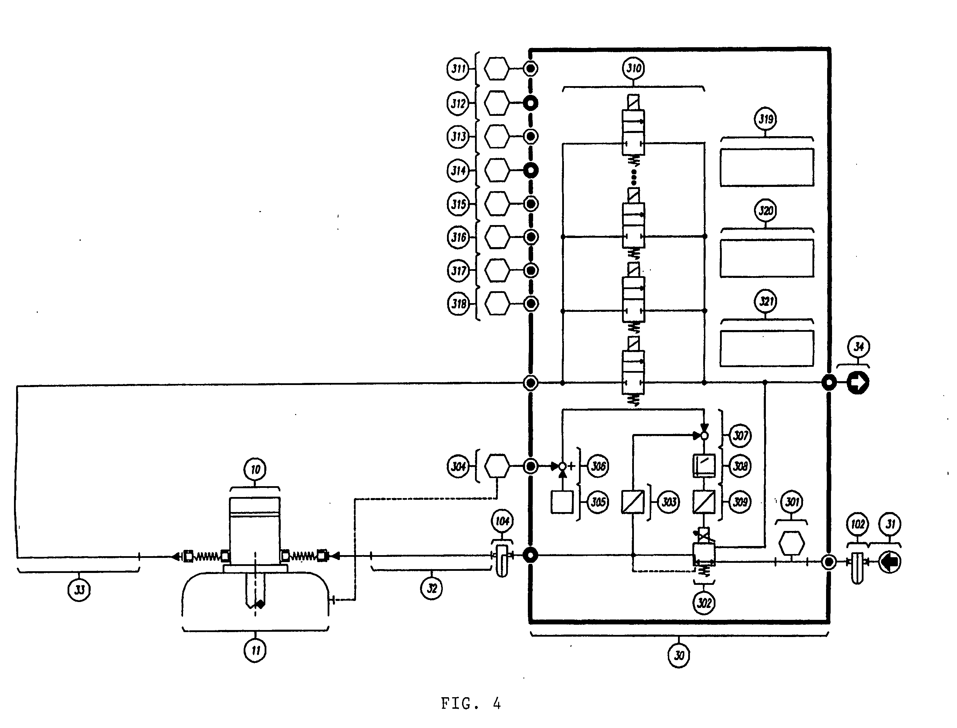

With reference to figure 4 a diagram is shown for an installation of an electronic device 30 object of the present invention in case of a dry-operating mechanical seal and designated by 10, assembled on a process machine designated by 11. Installation and operation modes should be sufficiently clear after analysing what is shown in figure 4. For a better understanding, refer to what has already been described with reference to figures 1 and 3. In this example and non-limiting application case, the components 315, 316 and 318 are not used.

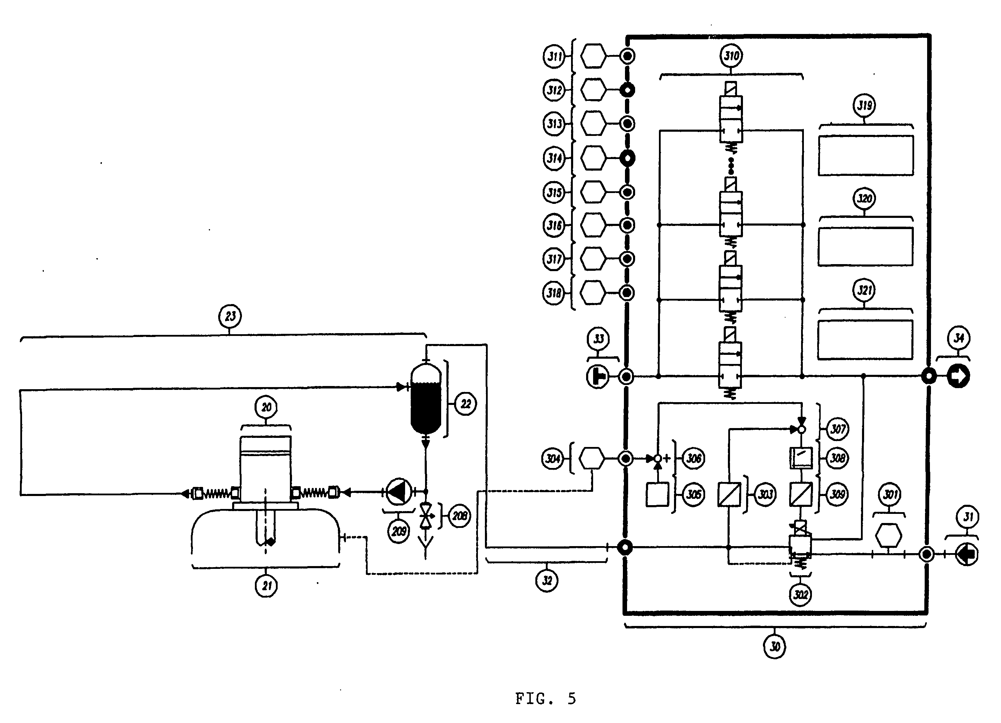

With reference to figure 5, a diagram is shown for an installation of an electronic device 30 object of the present invention in case of a mechanical seal operating with liquid and designated by 20, assembled on a process machine designated by 21. Installation and operation modes should be sufficiently clear after an analysis of what is shown in figure 5. For a better understanding refer to what is already described with reference to figures 2 and 3. In this example and non-limiting application case, the components 310 and 317 are not used. The input line 33 is here consequently closed since a flowing with gas is not required, like in dry applications.

With reference to figure 6, a functional diagram is shown that provides for a control and management process realised by a multifunctional electronic device for a mechanical seal according to the teachings of the present invention. For a better understanding reference is made also to what is already shown in figure 3. A switch-on block 600 of the electronic device 30 is followed by an operation enabling check block 601. If the operation is enabled, the flow goes to an anomalies check block 602. If no anomalies are detected, an integrity check request verifying block 603 is reached. If the integrity check is not required, a pressure regulation block 604 is reached. From here the flow goes to a flowing need verifying block 605. If flowing is necessary, a flow-rate regulation block 606 is reached, otherwise this block 606 is bypassed. After block 606, the flow goes, in a succession, to an operating hours counting block 607, to a data displaying and recording block 608 and to an interfacing block 609 with other possible systems, to go back then to the operation enabling check block 601 (already mentioned). If the operation is not enabled, the flow instead goes to a configuration modify request verifying block 612 for the electronic device 30. If it is desired to modify the current configuration, a system reconfiguration block 613 is reached, otherwise this block 613 is bypassed and a command reset block 614 is directly reached. From here the flow returns to the data displaying and recording block 608 (already mentioned). If the seal integrity check from block 603 is requested, an integrity check block 610 is reached. If no leakage results in the mechanical seal, the operating hours counting block 607 (already mentioned) is reached. If instead, starting from anomalies checking block 602 (already mentioned) or integrity checking block 610 (already mentioned), alarms or anomalies are pointed out, then an alarm managing block 611 is reached, from which the operating hours counting block 607 (already mentioned) is then reached. In practice when voltage is supplied to the electronic device 30 (switch-on block 600) a microprocessor starts automatically performing a cyclic program. In program block 601 a check is performed through the external signal 311 to verify the mechanical seal operating enabling. If the answer is affirmative, block 602 is reached where possible anomalies are checked by monitoring signals coming from components 301, 315, 316, 317 and 318. In case anomalous situations are detected, block 611 is reached for a correct management of active alarms that brings about the appropriate driving and check of components 302 and 310 and signals 312 and 313. Instead in case there are no alarm conditions, block 603 is reached, in which; depending on system parameters that can be reconfigured in block 613, it is decided whether or not to perform the mechanical seal integrity check. The integrity check is performed periodically and alternate with normal pressurising and flowing operations. The integrity check, performed in block 610, brings about, as already described, the seal pressurisation to a maximum value and the following measure of possible pressure leakage. In case of meaningful leakage, the electronic device 30 automatically generates an alarm and goes to block 611. If the integrity check is not required, the program performs block 604 in which the mechanical seal pressure is regulated through components 302, 303, 304, 305, 306, 307, 308 and 309 as already described. The mechanical seal pressure, when the integrity check is not active, is then kept regulated to a greater value than an optimum difference 305 with respect to process pressure 304. in block 605 it is checked, depending on system parameters that can be reconfigured in block 613, whether it is necessary to also perform a seal flowing, possibly performed in block 606 by suitably driving and controlling, as already described, the multivalve 310 (or, alternatively, the 2-way proportional valve) depending on the current pressure value detected by live transducer 303 and the desired flow-rate value made able to be reconfigured in block 613. Then, if the mechanical seal operation is required, the electronic device 30 automatically performs a pressure regulation with possible flowing, alternated with periodic integrity check cycles. Under these operating conditions, block 607 also counts the actual operating hours. Independently from the operating status of the electronic device 30 in block 608, all available data and parameters (current and historical ones) can be displayed in real time on the display 319 and are systematically recorded onto the mass storage 321. The block 609 is prearranged to make it possible to interface and connect the electronic device 30 with other possible apparata or automation systems. If the mechanical seal operation is not temporarily necessary, it is possible to request, in block 612, the electronic device 30 configuration data variation. In. block 614 then the commands for components 302 and 301 are suitably reset when the system must not be operating.

Thereby, according to the present invention, the multifunctional electronic device 30, based on a microprocessor, is expressly designed and realised for the advanced automatic check of all operating and diagnostic conditions of a mechanical seal. In particular object of the present invention is realising a multifunctional electronic device for a mechanical seal that allows having:
- all automated functionalities, related and integrated into a single electronic device;
- a pressure regulation depending on the process pressure behaviour;
- a fine and continuous flowing regulation even under variable pressure conditions;
- an automatic and systematic check of all operating conditions (low pressure, low flow, high flow, low level, high level, etc.);
- an automatic and systematic check of seal integrity based on the evaluation of actual pressure leakage;
- an automatic count of actual operating hours, also coupled with different pressurisation values;
- a certification and validation of operating and diagnostic conditions;
- a prearrangement to be interfaced and connected with other possible apparata or automation systems.

All functional, diagnostic and control aspects related to a mechanical seal are automated, mutually related and integrated in a single electronic device. It is pointed out that centralising all functionalities performed by a single microprocessor of the electronic device 30 allows mutually relating, synchronising and integrating actions, regulations and checks, more efficiently monitoring the operating variables and realising a really advanced automatic system.

Pressurisation is regulated by the electronic device 30 in an automatic and continuous way. The pressure regulation is made depending also on the pressure inside the process machine or the pump delivery line where the mechanical seal is inserted. The mechanical seal is then pressurised at variable pressure values, automatically defined by the electronic device 30 depending on a reference pressure, thereby guaranteeing a constant and optimum pressure difference between pressure inside the seal and process pressure. It is obvious that such pressure regulation is intrinsically more complex to be realised with respect to commonly adopted solutions and requires acquiring the process pressure measure, that before was not involved in seal pressurisation. It must also be taken into account that the chance of working with a pressurised seal at variable values technically complicates the realisation of the possible flow-rate regulation. It should however appear evident that these disadvantages are widely offset by the guarantee of always having an optimum compression of seal faces due to keeping a pressure difference (ΔP) constant.

The seal flow-rate, if requested, is further continuously and finely regulated by the electronic device 30 also with variable pressure values depending on the process pressure in such a way as to be able to accurately and reliably correct the consequent deviations from the actual flow. The technical arrangement adopted and coupled with the electronic device 30 uses a series of different precision nozzles that are pre-calibrated and automatically selected by the microprocessor depending on the current pressurisation value and on the setpoint value for the flow-rate suggested by the seal manufacturer. Accuracy and reliability of the thereby obtained flowing allow optimally cooling and lubricating the seal rings (extending their life and reducing maintenance costs), without having flowing fluid wastes (thereby avoiding economic and environmental damages).

The seal integrity check is performed in an automatic way that is systematically repeated by performing a pressurisation and stand-by sequence with following detection and evaluation of possible overpressure leakage. It must be noted that this integrity check method is adequate also when locating micro-leakage, that can anyway be meaningful both for functional purposes and for environmental purposes. Moreover the pressure leakage monitoring for the mechanical seal through analogue instruments (in place of traditional on/off transducers) allows detecting time variations of such leakage, even if minimum, and consequently evaluating the functional seal decay thereby favouring their preventive maintenance.

The electronic device 30 is able to totally count the actual operating hours, records them and classifies them also depending on different seal pressurisation and process pressure values. Such specific information related to actual operating hours and conditions can be further processed in preventive maintenance activities.

All alarms, anomalies, operating hours and conditions, operating and diagnostic parameters are data that are strictly recorded by the electronic device 30 in order to have an historical trace thereof. Such data can be made available to document and certify life and modes of the occurred use of the mechanical seal. Then the electronic device 30 is also proposed as "black box" that is able to certify (in an undisputable and "super partes" way) the operating hours and modes, malfunctions and any other situation that could be practically interesting, since all alarms, anomalies, operating hours and conditions, operating and diagnostic parameters are data that can be displayed and are strictly recorded by the electronic device 30 on a support that cannot be deleted by a user. Outside the warranty period, these data allow performing objective comparisons between different technologic solutions and can be managed within efficient preventive maintenance programs.

The electronic device 30 provided for the chance of being interfaced and connected with other apparata or automation systems, becoming easily integrated in any automation context or distributed control structure.

From the performed description the characteristics of the multifunctional electronic device for a mechanical seal and of the control and management process realised by such electronic device, object of the present invention, clearly appear, as well as the related advantages among which the following must be remembered:
- simple installation;
- accurate, reliable and completely automatically managed operation;
- advanced and always optimum control modes even when the pressure changes inside the process machine or in the pump delivery line where the mechanical seal is inserted;
- integrated and advanced management of all operating and diagnostic conditions;
- operating cost and environmental damages reduction with respect to prior art.

It is finally clear that the thereby-devised multifunctional electronic device for a mechanical seal and the control and management process realised by this electronic device are subjected to numerous modifications and variations all falling within the scope of the invention; moreover all details can be replaced by technically equivalent elements.

In addition to what has already been expressed, the scope of the invention is therefore limited only by the enclosed claims.

## Claims

1. Electronic device (30) for a mechanical seal (10, 20) of a pump or a process machine (11, 21), adapted to automatically and continuously regulate a first pressure (303) inside the mechanical seal (10, 20) depending on a second measured pressure (304) in order to keep constant an optimum difference (305) between said first and second pressures, **characterised in that**:
- said electronic device (30) is connectable to a fluid pressurisation line (32) of the mechanical seal (10, 20), to a fluid supply line (31) and to a pressure detection means (304),
**in that** said electronic device comprises:
• at least one pressure regulation element (302) in a line between the fluid supply line (31) and the fluid pressurisation line (32) to control the pressure in the fluid pressurisation line (32),
• at least one transducer (303) adapted to detect a measured value of said first pressure (303) to the fluid pressurisation line (32),
• at least one converter (309) adapted to drive said pressure regulation element (302); and
• at least one microprocessor, said microprocessor running a regulating algorithm (308) for said converter (309), said pressure regulation element (302) and said transducer (303), said regulating algorithm (308) enabling said electronic device to perform at least one of the following functions:
a) regulating (604) said pressure (303) detected by said transducer (303) and said pressure (304) by comparing said pressure (303) with a desired pressure setpoint value, said setpoint value being the sum of said pressure (304) and of an optimum set pressure difference (305) imposed or suggested by a manufacturer of said mechanical seal (10, 20);
b) regulating (606) a flow-rate of said mechanical seal (10, 20);
c) checking (610) the integrity of said mechanical seal (10, 20) based on detection and evaluation of actual pressure leakage;
d) checking (602) for anomalies in said mechanical seal (10, 20);
e) counting (607) operating hours of said mechanical seal (10, 20);
f) displaying and recording (608) data for said mechanical seal (10, 20); interfacing (609) with other possible systems.

2. Electronic device (30) according to claim 1,
**characterised in that** said regulating algorithm (308) receives data from a comparator (307) that compares a measured value, output from said transducer (303), with a desired value, output from an adder (306) that sums to a process pressure, detected by a pressure transmitter (304), said optimum pressure difference (305).

3. Electronic device (30) according to claim 1,
**characterised in that** said regulating algorithm (308) is temporarily disabled by said microprocessor, forcing a fixed configuration of said pressure regulating element (302), without necessarily depending on desired and measured values output from said comparator (307).

4. Electronic device (30) according to claim 1,
**characterised in that** said pressure regulating element (302) is realised with a proportional valve of the three way type.

5. Electronic device (30) according to claim 1,
**characterised in that** said pressure regulating element (302) is realised by employing two proportional valves of the two way type, one valve in order to be able to increase the pressure of said pressurisation line (32) through a divided connection to said supply line of a fluid (31), another valve to decrease the pressure through a divided connection to a vent line (34).

6. Electronic device (30) according to claim 1,
**characterised in that** said transducer (303) is adapted to measure the pressure in the pressurisation line (32) output from said electronic device (30) and then is also adapted to measure the pressure inside said mechanical seal (10, 20).

7. Electronic device (30) according to claim 1,
**characterised in that** said regulating algorithm (308), depending on the proportional, integral, derivative component or other types of error between measured value and desired value, is adapted to decide, during normal operations, how to control said pressure regulating element (302).

8. Electronic device (30) according to claim 1,
**characterised in that** it further comprises a minimum pressure switch (301) connected between said pressure regulating element (302) and said fluid (31) supply line, said minimum pressure switch (301) being adapted to generate a possible low pressure alarm.

9. Electronic device (30) according to claim 1,
**characterised in that** said electronic device (30) is further connectable to a flow line (33) coming from said mechanical seal (10, 20) and to a vent line (34) and **in that** said electronic device (30) further comprises a flow-rate regulating element (310) between said flow line (33) and said vent line (34).

10. Electronic device (30) according to claim 9,
**characterised in that** said flow-rate regulating element (310) is made of a multivalve that has a series of precision nozzles that are pre-calibrated and mutually arranged in parallel.

11. Electronic device (30) according to claim 10,
**characterised in that** for each one of said nozzles a flow-rate is known a priori for every possible pressure value, said device (30) being adapted to adjust through said microprocessor a flow-rate on said return line (33) by controlling an opening or closing of said nozzles depending on a variable pressure measure, detected by said transducer (303), and on a desired flow-rate value imposed or suggested by a manufacturer of said mechanical seal (10, 20) or temporarily requested by a specific control procedure.

12. Electronic device (30) according to claim 9,
**characterised in that** said flow-rate regulating element (310) is realised with a proportional valve of the two-way type fed-back by a suitable flowmeter, said feed-back being realised by the microprocessor in order to guarantee on said return line (33) a measured flow-rate value as imposed or suggested by a manufacturer of said mechanical seal (10, 20) or as temporarily requested by a specific control procedure.

13. Electronic device (30) according to claim 1,
**characterised in that**, during said integrity checking function, a null flow-rate through said flow-rate regulating element (310) and a maximum pressure through said pressure regulating element (302) are initially and temporarily imposed.

14. Electronic device (30) according to claim 12,
**characterised in that** said microprocessor is further adapted to temporarily disable said regulating algorithm (308) and to inhibit said pressure regulating element (302), thereby insulating said mechanical seal (10, 20) from said supply line of a fluid (31) and avoiding an automatic compensation of possible pressure leakage on said pressurisation line (32).

15. Electronic device (30) according to claim 14,
**characterised in that** said microprocessor, once having pressurised and insulated said mechanical seal (10, 20), is adapted to evaluate in a prefixed time a possible time variation of the pressure measure measured by the transducer (303), generating an alarm situation when the detected pressure leakage in a known time is greater than a preset value.

16. Electronic device (30) according to claim 15,
**characterised in that**, at the end of said integrity checking function and without such alarm situation, said electronic device (30) is adapted to automatically restore the normal pressure and flow-rate regulations.

17. Electronic device (30) according to claim 1,
**characterised in that** in order to monitor possible alarms, anomalies and malfunctions, said electronic device (30) is prearranged for acquiring external signals coming from possible minimum level switches and flowmeters (316, 318) and maximum level switches and flowmeters (315, 317), generating possible alarms for low level, high level, low flow and high flow.

18. Electronic device (30) according to claim 1,
**characterised in that** said device (30) is further adapted to receive an input signal (311) that is a contact prearranged to recognise when said mechanical seal (10, 20) is operating, realising an automatic activation of operating and diagnostics functionalities in addition to a count and a recording of actual operating hours.

19. Electronic device (30) according to claim 18,
**characterised in that** said device (30) is adapted to count the actual operating hours of said mechanical seal (10, 20) classifying them also depending on different seal pressurisation and process pressurisation.

20. Electronic device (30) according to claim 1,
**characterised in that** said device (30) is further adapted to receive an output signal (312) that is a contact prearranged for signalling the existence of possible current alarm situations, and to receive an input signal (313) that is a contact prearranged for a remote recognition and a reset of possible alarm or lock situations, realising through said output and input signals an integration of command and controls of said electronic device (30) with those of other possible apparata or automation systems.

21. Electronic device (30) according to claim 1,
**characterised in that** said device (30) is further adapted to receive an output signal (314) that is a prearranged "Watch Dog" contact, managed as pulse frequency output, allowing other possible apparata a monitoring of a correct operation of said electronic device (30).

22. Electronic device (30) according to claim 21,
**characterised in that** it is equipped with a display (319) and a keyboard (320), for reconfiguring operating parameters and for displaying current and historical available data, and with a mass storage (321), for recording these data.

23. Electronic device according to claim 22,
**characterised in that** said mass storage (321) is of the solid state type and cannot be deleted by a user, allowing a data recording in order to have such an historical trace as to document, certify and validate life, operating modes and diagnostic conditions of said mechanical seal (10, 20).

24. Control and management process for an electronic device (30) according to claim 1, **characterised in that** it comprises the following sequential steps that are cyclically realised by said electronic device (30) of claim 1: switch-on step (600) performed only the first time, operation enabling checking step (601), anomalies checking step (602) performed only in case of positive check in said step (601), integrity control request checking step (603) performed only in case of no anomalies detected in said step (602), pressure regulating step (604) performed only in case of negative check in said step (603), flowing need checking step (605), flow-rate regulating step (606) bypassed in case of negative check in said step (605), operating hours counting step (607), data displaying and recording step (608), interfacing step with other possible systems (609).

25. Control and management process according to claim 24, **characterised in that** it comprises the following sequential steps that are cyclically performed only in case of negative check in said step (601): configuration modify request checking step (612), system reconfiguring step (613) bypassed in case of negative check in said step (612), command resetting step (614), said data displaying and recording step (608), said interfacing step with other possible systems (609).

26. Control and management process according to claim 24, **characterised in that** it comprises the following sequential steps that are cyclically performed only in case of positive check in said step (603): integrity checking step (610), alarm managing step (611) bypassed in case of no alarms detected in said step (610), said operating hours counting step (607), said data displaying and recording step (608), said interfacing step with other possible systems (609).

27. Control and management process according to claim 24, **characterised in that** it comprises the following sequential steps that are cyclically performed only in case of anomalies detected in said step (602): alarm managing step (611), said operating hours counting step (607), said data displaying and recording step (608), said interfacing step with other possible systems (609).

## Patentansprüche

1. Elektronische Vorrichtung (30) für eine mechanische Dichtung (10, 20) einer Pumpe oder Prozessmaschine (11, 21), für die automatische und kontinuierliche Regulierung eines ersten Drucks (303) in der mechanischen Dichtung (10, 20) in Abhängigkeit eines zweiten gemessenen Drucks (304), um konstant eine optimale Differenz (305) zwischen dem ersten und zweiten Druck beizubehalten, mit folgenden Eigenschaften:
- die betreffende elektronische Vorrichtung (30) kann mit einer Fluidik-Druckaufbaulinie (32) der mechanischen Dichtung (10, 20) verbunden werden, mit einer Flüssigkeitsversorgungslinie (31) und mit Druckmessmitteln (304),
wobei diese elektronische Vorrichtung folgendes umschließt:
• wenigstens ein Druckregelelement (302) in einer Leitung zwischen der Flüssigkeitsversorgungsleitung (31) und der Fluidik-Druckaufbaulinie (32) für Kontrolle des Drucks in der Fluidik-Druckaufbaulinie (32),
• wenigstens einen Wandler (303) für die Erfassung eines Messwertes des besagten ersten Drucks (303) in der Fluidik-Druckaufbaulinie (32),
• wenigstens einen Konverter (309) für die Steuerung des besagten Druckreglerelements (302), und
• wenigstens einen Mikroprozessor, wobei dieser Mikroprozessor einen Regler-Algorithmus (308) für den besagten Konverter (309), das besagte Druckreglerelement (302) und den besagten Wandler (303) ausführt, wobei der besagte Regler-Algorithmus (308) der besagten elektronischen Vorrichtung die Ausführung wenigstens einer der nachfolgenden Funktionen erlaubt:
a) die Regulierung (604) des besagten Drucks (603), der durch den besagten Wandler (303) und den besagten Druck (304) erfasst wird, unter Vergleich des besagten Drucks (303) mit einem vorgegebenen, gewünschten Druckwert, wobei der besagte Punktwert die Summe des besagten Drucks (304) und einer vorgegebenen, optimalen Druckdifferenz (305) ist, die vom Hersteller der besagten mechanischen Dichtung (10, 20) vorgegeben oder angeraten wird;
b) die Regulierung (606) der Förderleistung der besagten mechanischen Dichtung (10, 20);
c) die Kontrolle (610) der Unversehrtheit der besagten mechanischen Dichtung (10, 20) auf der Basis der Erfassung und Bewertung der effektiven Druckverluste;
d) die Kontrolle (602) des Vorhandenseins von Anomalien in der besagten mechanischen Dichtung (10, 20);
e) die Zählung (607) der Betriebsstunden der besagten mechanischen Dichtung (10, 20);
f) die Anzeige und Registrierung (608) der Daten der besagten mechanischen Dichtung (10, 20);
g) die Schnittstelle (609) mit anderen eventuellen Systemen.

2. Elektronische Vorrichtung (30) gemäß dem Patentanspruch 1, charakterisiert durch die Tatsache, dass der besagte Regler-Algorithmus (308) Daten von einem Komparator (307) erhält, welche den als Ausgang von dem besagten Wandler (303) gesandten Messwert mit dem gewünschten Wert vergleicht, der als Ausgang von einem Summierer (306) kommt, der die besagte optimale Druckdifferenz (305) zu einem Prozessdruck addiert, der von einem Drucksender (304) erfasst wurde.

3. Elektronische Vorrichtung (30) gemäß dem Patentanspruch 1, charakterisiert durch die Tatsache, dass der besagte Regler-Algorithmus (308) zeitbegrenzt von dem besagten Mikroprozessor ausgeschlossen wird, wodurch eine feste Konfiguration des besagten Druckreglerelements (302) forciert wird, ohne unbedingt notwendige Abhängigkeit von den gewünschten Werten und Messwerten, die als Ausgang vom besagten Komparator (307) kommen.

4. Elektronische Vorrichtung (30) gemäß dem Patentanspruch 1, charakterisiert durch die Tatsache, dass das besagte Druckreglerelement (302) aus einem proportionalen Dreiwegeventil besteht.

5. Elektronische Vorrichtung (30) gemäß dem Patentanspruch 1, charakterisiert durch die Tatsache, dass das besagte Druckreglerelement (302) durch Verwendung von zwei proportionalen Zweiwegeventile realisiert wurde, ein Ventil für die Zunahme des Drucks auf der besagten Druckaufbaulinie (32) durch partiellen Anschluss einer Flüssigkeit (31) an die besagte Versorgungslinie, das andere Ventil für Druckabnahme durch partiellen Anschluss an eine Luftablasslinie (34).

6. Elektronische Vorrichtung (30) gemäß dem Patentanspruch 1, charakterisiert durch die Tatsache, dass der besagte Wandler (303) in der Lage ist, den Druck der Druckaufbaulinie (32) am Ausgang der besagten elektronischen Vorrichtung (30) zu messen und somit auch den Innendruck der besagten mechanischen Dichtung (10, 20) messen kann.

7. Elektronische Vorrichtung (30) gemäß dem Patentanspruch 1, charakterisiert durch die Tatsache, dass der besagte Regler-Algorithmus (308), auf Grund des integralen, abgeleiteten proportionalen Elements, oder anderen Fehlertypen zwischen dem Messwert und dem gewünschten Wert, während des Normalbetriebs entscheiden kann, wie das besagte Druckreglerelement (302) zu steuern ist.

8. Elektronische Vorrichtung (30) gemäß dem Patentanspruch 1, charakterisiert durch die Tatsache, dass sie weiterhin einen Mindestdruckwächter (301) umfasst, der zwischen dem besagten Druckreglerelement (302) und der besagten Flüssigkeitsversorgungsleitung (31) angeschlossen ist. Dieser Minimum-Druckwächter (301) ist in der Lage, einen eventuellen Niederdruckalarm auszulösen.

9. Elektronische Vorrichtung (30) gemäß dem Patentanspruch 1, charakterisiert durch die Tatsache, dass die besagte elektronische Vorrichtung (30) weiterhin mit einer Flusslinie (33) verbunden werden kann, die von der besagten mechanischen Dichtung (10, 20) kommt, und auch an eine Luftablasslinie (34), sowie durch die Tatsache, dass die besagte elektronische Vorrichtung (30) ein Reglerelement für die Förderleistung (310) zwischen der besagten Flusslinie (33) und der besagten Luftablasslinie (34) umfasst.

10. Elektronische Vorrichtung (30) gemäß dem Patentanspruch 9, charakterisiert durch die Tatsache, dass das besagte Förderleistungs-Reglerelement (310) durch ein Mehrfachventil mit einer Reihe Präzisionsdüsen realisiert wurde, die vorgeeicht und parallel zueinander angeordnet sind.

11. Elektronische Vorrichtung (30) gemäß dem Patentanspruch 10, charakterisiert durch die Tatsache, dass für jede dieser Düsen schon vorher die Förderleistung für jeden möglichen Druckwert bekannt ist, wodurch die besagte Vorrichtung (30) in der Lage ist, durch den besagten Mikroprozessor eine Förderleistung auf der besagten Rückkreislinie (33) zu regulieren und die Öffnung oder den Verschluss der besagten Düsen auf Grund der durch den besagten Wandler (303) erfassten, variablen Druckmessung und einem gewünschten Förderleistungswert zu steuern, der vom Hersteller der besagten mechanischen Dichtung (10, 20) vorgegeben oder angeraten oder zeitbegrenzt von einem spezifischen Kontrollvorgang verlangt wurde.

12. Elektronische Vorrichtung (30) gemäß dem Patentanspruch 9, charakterisiert durch die Tatsache, dass das besagte Förderleistungs-Reglerelement (310) durch ein proportionales Zweiwegeventil realisiert wurde, das von einem betreffenden Flussmesser rückbetätigt wird. Diese Rückbetätigung wird von einem Mikroprozessor so ausgeführt, dass auf der besagten Rückkreislinie (33) ein Messförderleistungswert garantiert wird, wie vom Hersteller der besagten mechanischen Dichtung (10, 20) vorgegeben und angeraten oder wie zeitweilig von einem spezifischen Kontrollvorgang verlangt.

13. Elektronische Vorrichtung (30) gemäß dem Patentanspruch 1, charakterisiert durch die Tatsache, dass während der besagten Integritätskontrollfunktion anfänglich und zeitbegrenzt eine Förderleistung gleich null durch das besagte Förderleistungs-Reglerelement (310) eingestellt wird und ein Maximaldruck durch das besagte Druckreglerelement (302).

14. Elektronische Vorrichtung (30) gemäß dem Patentanspruch 12, charakterisiert durch die Tatsache, dass der besagte Mikroprozessor weiterhin in der Lage ist, den besagten Regler-Algorithmus (308) zeitweilig auszuschließen und das besagte Druckreglerelement (302) einzuschließen, wodurch die besagte mechanische Dichtung (10, 20) von der besagten Flüssigkeitsversorgungsleitung (31) isoliert bleibt, wodurch ein automatischer Ausgleich eventueller Druckverluste auf der besagten Druckaufbaulinie (32) vermieden wird.

15. Elektronische Vorrichtung (30) gemäß dem Patentanspruch 14, charakterisiert durch die Tatsache, dass der besagte Mikroprozessor nach Druckaufbau und Isolierung der besagten mechanischen Dichtung (10, 20), in der Lage ist, innerhalb einer vorgegebenen Zeit die eventuelle Veränderung der Druckmessung mit der Zeit zu bewerten, die vom Wandler (303) gemessen wird, und eine Alarmmeldung auszulösen, wenn der in einer gewissen Zeit erfasste Druckverlust über dem vorgegebenen Wert liegt.

16. Elektronische Vorrichtung (30) gemäß dem Patentanspruch 15, charakterisiert durch die Tatsache, dass nach Beendigung der besagten Integritätskontrollfunktion und bei Nichtvorhandensein der Alarmsituation die besagte elektronische Vorrichtung (30) in der Lage ist, automatisch die normalen Druckregler- und Förderleistungsbedingungen wieder herzustellen.

17. Elektronische Vorrichtung (30) gemäß dem Patentanspruch 1, charakterisiert durch die Tatsache, dass für die Überwachung eventueller Alarme, Anomalien, Störungen die besagte elektronische Vorrichtung (30) für den Eingang von externen Signalen ausgerüstet ist, die von eventuellen Mindeststand- und Flussmessern (316, 318) und Höchststand- und Flussmessern (315, 317) kommen, mit Auslösung eventueller Alarme wegen Niedrigstand, Höchststand, niedrigen Fluss und hohen Fluss.

18. Elektronische Vorrichtung (30) gemäß dem Patentanspruch 1, charakterisiert durch die Tatsache, dass die besagte Vorrichtung (30) weiterhin in der Lage ist, ein Eingangssignal (311) zu erhalten, das einen Kontakt darstellt, um zu erkennen, wenn die besagte mechanische Dichtung (10, 20) arbeitet, mit automatischer Aktivierung der Arbeits- und Diagnostikfunktionen sowie einer Zählung und Registrierung der effektiven Betriebsstunden.

19. Elektronische Vorrichtung (30) gemäß dem Patentanspruch 18, charakterisiert durch die Tatsache, dass die besagte Vorrichtung (30) in der Lage ist, die effektiven Betriebsstunden der besagten mechanischen Dichtung (10, 20) zu zählen und auch gemäß einem unterschiedlichen Druckaufbau in der Dichtung und im Prozess zu klassifizieren.

20. Elektronische Vorrichtung (30) gemäß dem Patentanspruch 1, charakterisiert durch die Tatsache, dass die besagte Vorrichtung (30) in der Lage ist, ein Ausgangssignal (312) zu erhalten, das einen Kontakt für die Meldung eventuell laufender Alarmvorgänge darstellt, und ein Eingangssignal (313), das einen Kontakt für die remote Erkenntnis und ein Reset eventueller Alarm- oder Blockierungssituationen darstellt, wobei durch die besagten Ausgangs- und Eingangssignale eine Integrierung der Steuerung und Kontrolle der besagten elektronische Vorrichtung (30) mit eventuell anderen Geräten oder Automationssystemen realisiert wird.

21. Elektronische Vorrichtung (30) gemäß dem Patentanspruch 1, charakterisiert durch die Tatsache, dass die besagte Vorrichtung (30) weiterhin in der Lage ist, ein Ausgangssignal (314) zu erhalten, das einen "Watch Dog"-Kontakt darstellt, und als impulsiver Ausgang in Frequenz verwaltet wird, wodurch anderen Geräten die Überwachung des korrekten Betriebs der besagten elektronischen Vorrichtung (30) ermöglicht wird.

22. Elektronische Vorrichtung (30) gemäß dem Patentanspruch 21, charakterisiert durch die Tatsache, dass sie mit einem Display (319) und einer Tastatur (320) für die Neukonfiguration der Arbeitsparameter und für Anzeige der aktuellen und historischen, verfügbaren Daten ausgestattet ist und mit einem Großspeicher (321) für die Registrierung dieser Daten.

23. Elektronische Vorrichtung (30) gemäß dem Patentanspruch 22, charakterisiert durch die Tatsache, dass der besagte Großspeicher (321) des Festzustandstyp ist und damit nicht vom Benutzer gelöscht werden kann und somit die Datenregistrierung ermöglicht, für ein Archiv, durch das die Lebensdauer, die Arbeitsmodalitäten und die Diagnostikbedingungen der besagten mechanischen Dichtung (10, 20) belegt, zertifiziert und bewertet werden können.

24. Kontroll- und Verwaltungsvorgang für die elektronische Vorrichtung (30) gemäß dem Patentanspruch 1, charakterisiert durch die Tatsache, folgende sequentiellen Phasen einzuschließen, die zyklisch von der besagten elektronischen Vorrichtung (30) des Patentanspruchs 1 ausgeführt werden: Zündungsphase (600), die nur das erste Mal ausgeführt wird, Zuschaltungsphase der Funktionstüchtigkeit (601), Anomalien-Kontrollphase (602), die nur bei positivem Ergebnis der besagten Phase (601) ausgeführt wird, Anforderungsphase der Integritätskontrolle (603), die nur ausgeführt wird, wenn keine Anomalie in der besagten Phase (602) gefunden wurde, Druckreglerphase (604), die nur bei negativem Ergebnis der besagten Phase (603) ausgeführt wird, Flussbedarf-Prüfphase (605), Förderleistungseinstellphase (606), die bei negativem Ergebnis der besagten Phase (605) übersprungen wird, Zählungsphase der Betriebsstunden (607), Datenanzeige- und Registrierphase (608), Phase für Anschluss mit eventuellen anderen Systemen (609).

25. Kontroll- und Verwaltungsvorgang gemäß dem Patentanspruch 24, charakterisiert durch die Tatsache, dass er auch folgende sequentiellen Phasen einschließt, die zyklisch nur im Falle von negativen Ergebnissen in der besagten Phase (601) ausgeführt werden: Prüfphase der Konfigurationsveränderungsanforderung (612), Phase der System-Neukonfiguration (613), die bei negativem Ergebnis der besagten Phase (612) übersprungen wird, Phase für Befehl-Reset (614), die besagte Datenanzeige- und Registrierphase (608), die besagte Phase für Anschluss mit eventuellen anderen Systemen (609).

26. Kontroll- und Verwaltungsvorgang gemäß dem Patentanspruch 24, charakterisiert durch die Tatsache, auch folgende sequentiellen Phasen zu umfassen, die zyklisch nur im Falle von in der besagten Phase (603) gefundenen Anomalien ausgeführt werden: Integritätskontrollphase (610), Alarmverwaltungsphase (611), die übersprungen wird, wenn kein Alarm in der besagten Phase (610) gefunden wurde, die besagte Zählphase der Betriebsstunden (607), die besagte Datenanzeige- und Registrierphase (608), die besagte Phase für Anschluss mit eventuellen anderen Systemen (609).

27. Kontroll- und Verwaltungsvorgang gemäß dem Patentanspruch 24, charakterisiert durch die Tatsache folgende sequentiellen Phasen einzuschließen, die zyklisch nur dann ausgeführt werden, wenn Anomalien in der besagten Phase (602) gefunden wurden: Alarmverwaltungsphase (611), die besagte Zählphase der Betriebsstunden (607), die besagte Datenanzeige und Registrierphase (608), die besagte Phase für Anschluss mit anderen eventuellen Systemen (609).

## Revendications

1. Dispositif électronique (30) pour une tenue mécanique (10, 20) d'une pompe ou d'une machine de traitement (11, 21), capable de régler en mode automatique et continu une première pression (303) à l'intérieur de la tenue mécanique (10, 20) suivant une seconde pression mesurée (304) dans le but de maintenir constante une différence optimale (305) entre lesdites première et seconde pression, **caractérisé en ce que**:
- ledit dispositif électronique (30) peut être relié à une ligne de pressurisation d'un fluide (32) de la tenue mécanique (10, 20), à une ligne d'alimentation du fluide (31) et à des moyens de relevé de la pression (304), et **en ce que** ledit dispositif électronique comprend:
• au minimum un élément régulateur de pression (302) dans une ligne entre la ligne d'alimentation du fluide (31) et la ligne de pressurisation du fluide (32) pour contrôler la pression dans la ligne de pressurisation du fluide (32),
• au minimum un transducteur (303) capable de relever une valeur mesurée de ladite première pression (303) dans la ligne de pressurisation du fluide (32),
• au moins un convertisseur (309) capable de commander ledit élément régulateur de pression (302), et
• au moins un microprocesseur, ledit microprocesseur effectuant un algorithme de régulation (308) pour ledit convertisseur (309), ledit élément régulateur de pression (302) et ledit transducteur (303), ledit algorithme de régulation (308) permettant audit dispositif électronique d'effectuer au moins une des fonctions suivantes :
a) régler (604) la pression (603) relevée par le transducteur (303) et ladite pression (304) en comparant cette pression (303) avec une valeur de point établie de pression désirée, ladite valeur de point établie étant la somme de ladite pression (304) et d'une différence de pression établie optimale (305) imposée ou conseillée par le constructeur de ladite tenue mécanique (10, 20);
b) régler (606) le débit de ladite tenue mécanique (10, 20);
c) contrôler (610) l'intégrité de ladite tenue mécanique (10, 20) en se basant sur le relevé et l'évaluation de la perte de pression effective;
d) contrôler (602) la présence d'anomalies dans ladite tenue mécanique (10, 20);
e) décompter (607) les heures de fonctionnement de la tenue mécanique (10, 20);
f) afficher et enregistrer(608) les données pour la tenue mécanique (10, 20);
g) s'interfacer (609) avec d'autres éventuels systèmes.

2. Dispositif électronique (30) selon la revendication 1, **caractérisé en ce que** ledit algorithme de réglage (308) reçoit des données d'un comparateur (307) qui confronte une valeur mesurée, envoyée en sortie par ledit transducteur (303), avec une valeur désirée, envoyée en sortie par un totalisateur (306) qui totalise une pression de traitement, relevée par un transmetteur de pression (304), appelée différence optimale de pression (305).

3. Dispositif électronique (30) selon la revendication 1, **caractérisé en ce que** ledit algorithme de réglage (308) est temporairement désactivé par ledit microprocesseur, en forçant une configuration fixe dudit élément régulateur de pression (302), sans nécessairement dépendre des valeurs désirées et mesurées envoyées en sortie par ledit comparateur (307).

4. Dispositif électronique (30) selon la revendication 1, **caractérisé en ce que** ledit élément régulateur de pression (302) est réalisé avec une soupape proportionnelle du type à trois voies.

5. Dispositif électronique (30) selon la revendication 1, **caractérisé en ce que** ledit élément régulateur de pression (302) est réalisé en utilisant deux soupapes proportionnelles du type à deux voies, une soupape pour pouvoir incrémenter la pression de ladite ligne de pressurisation (32) à travers une connexion partialisée à ladite ligne d'alimentation d'un fluide (31), l'autre soupape servant à diminuer la pression à travers connexion partialisée à une ligne d'évents (34).

6. Dispositif électronique (30) selon la revendication 1, **caractérisé en ce que** ledit transducteur (303) est capable de mesurer la pression dans la ligne de pressurisation (32) en sortie dudit dispositif électronique (30) et il est donc capable de mesurer la pression à l'intérieur de ladite tenue mécanique (10, 20).

7. Dispositif électronique (30) selon la revendication 1, **caractérisé en ce que** ledit algorithme de régulation (308), en fonction de la composante proportionnelle, intégrale, dérivative ou d'autres types de l'erreur entre valeur mesurée et valeur désirée, est capable de décider, lors du fonctionnement normal, comment commander ledit élément régulateur de pression (302).

8. Dispositif électronique (30) selon la revendication 1, **caractérisé en ce que** qu'il comprend en outre un pressostat de minimum (301) relié entre ledit élément régulateur de pression (302) et ladite ligne d'alimentation du fluide (31), ce pressostat de minimum (301) étant en mesure d'engendrer une éventuelle alarme de basse pression.

9. Dispositif électronique (30) selon la revendication 1, **caractérisé en ce que** ledit dispositif électronique (30) peut être aussi relié à une ligne de flux (33) provenant de ladite tenue mécanique (10, 20) et à une ligne d'évents (34) et **en ce que** ledit dispositif électronique (30) comprend en outre un élément régulateur de débit (310) entre ladite ligne de flux (33) et ladite ligne de reniflards (34).

10. Dispositif électronique (30) selon la revendication 9, **caractérisé en ce que** ledit élément régulateur de débit (310) est réalisé avec une soupape multiple avec une série de tuyères de précision pré-réglées et disposées en parallèle entre elles.

11. Dispositif électronique (30) selon la revendication 10, **caractérisé en ce que** pour chacune desdites tuyères, un débit est connu à priori pour chaque valeur de pression possible, ledit dispositif (30) étant capable de régler, au moyen dudit microprocesseur un débit sur ladite ligne de retour (33) en commandant une ouverture ou une fermeture desdites tuyères en fonction de la mesure variable de pression, relevée par ledit transducteur (303), et d'une valeur désirée du débit préétabli ou conseillé par un constructeur de ladite tenue mécanique (10, 20) ou temporairement requis par une procédure de contrôle spécifique.

12. Dispositif électronique (30) selon la revendication 9, **caractérisé en ce que** ledit élément régulateur de débit (310) est réalisé avec une soupape proportionnelle du type à deux voies rétro-actionnée par un fluxmètre spécial, ladite rétro-action étant réalisée par le microprocesseur de manière à garantir sur ladite ligne de retour (33) une valeur mesurée de débit comme préétabli ou conseillé par un constructeur de ladite tenue mécanique (10, 20) ou temporairement requis par une procédure de contrôle spécifique.

13. Dispositif électronique (30) selon la revendication 1, **caractérisé en ce que** pendant ladite fonction de contrôle de l'intégrité, sont initialement et temporairement pré-déterminés un débit nulle à travers ledit élément régulateur de débit (310) et une pression maximale à travers ledit élément régulateur de pression (302).

14. Dispositif électronique (30) selon la revendication 12, **caractérisé en ce que** ledit microprocesseur est encore capable de désactiver temporairement ledit algorithme de régulation (308) et à invalider ledit élément régulateur de pression (302), en isolant ainsi ladite tenue mécanique (10, 20) de la ligne d'alimentation d'un fluide (31) et en évitant une compensation automatique d'éventuelles pertes de pression sur la ligne de pressurisation (32).

15. Dispositif électronique (30) selon la revendication 14, **caractérisé en ce que** ledit microprocesseur, une fois pressurisée et isolée ladite tenue mécanique (10, 20), est capable d'évaluer en un temps préfixé une éventuelle variation dans la durée, de la mesure de pression relevée par le transducteur (303), en générant une situation d'alarme quand la perte de pression relevée dans un laps de temps connu s'avère supérieure à une valeur prédéterminée.

16. Dispositif électronique (30) selon la revendication 15, **caractérisé en ce que**, à l'issue de ladite fonction de contrôle de l'intégrité et en absence de la situation d'alarme, ledit dispositif électronique (30) est capable de rétablir automatiquement les réglages de pression et de débit normaux.

17. Dispositif électronique (30) selon la revendication 1 **caractérisé en ce que**, pour superviser les éventuelles alarmes, anomalies et dysfonctionnements, ledit dispositif électronique (30) est prévu pour une acquisition de signaux extérieurs en provenance d'éventuels signaleurs de niveau et fluxmètres de minimum (316, 318) et signaleurs de niveaux et fluxmètres de maximum (315, 317), en engendrant d'éventuelles alarmes pour bas niveau, haut niveau, bas flux et haut flux.

18. Dispositif électronique (30) selon la revendication 1, **caractérisé en ce que** ledit dispositif (30) est encore capable de recevoir un signal d'entrée (311) qui est un contact prévu pour reconnaître quand ladite tenue mécanique (10, 20) est opérationnelle, en réalisant une activation automatique des fonctionnalités opérationnelles et diagnostiques en ajout à un décompte et un enregistrement des heures de fonctionnement effectives.

19. Dispositif électronique (30) selon la revendication 18, **caractérisé en ce que** ledit dispositif (30) est capable de faire le décompte des heures de fonctionnement effectives de ladite tenue mécanique (10, 20) en les classifiant même suivant une pressurisation de tenue et une pressurisation de traitement différentes.

20. Dispositif électronique (30) selon la revendication 1, **caractérisé en ce que** ledit dispositif (30) est encore capable de recevoir un signal de sortie (312) qui est un signal prévu pour une signalisation de l'existence d'éventuelles situations d'alarme en cours, et à recevoir un signal d'entrée (313) qui est un contact spécialement prévu pour une reconnaissance à distance et un reset d'éventuelles situations d'alarme ou de blocage, en réalisant, avec ces signaux de sortie et d'entrée, une intégration de commandes et contrôles dudit dispositif électronique (30) avec ceux d'autres équipements ou systèmes d'automation éventuels.

21. Dispositif électronique (30) selon la revendication 1, **caractérisé en ce que** ledit dispositif (30) est encore capable de recevoir un signal de sortie (314) qui est un contact prévu de "Watch Dog", géré comme sortie impulsive en fréquence, en permettant aux autres équipements éventuels, un monitorage d'un fonctionnement correct dudit Dispositif électronique (30).

22. Dispositif électronique (30) selon la revendication 21, **caractérisé en ce qu'**il est accompagné d'un écran d'affichage (319) et d'un clavier (320), pour une re-configuration des paramètres d'exploitation et pour un affichage des données actuelles et historiques disponibles, et d'une mémoire de masse (321) pour l'enregistrement de ces mêmes données.

23. Dispositif électronique (30) selon la revendication 22, **caractérisé en ce** ladite mémoire de masse (321) est du type à l'état solide et ne peut être annulée par l'utilisateur, en permettant l'enregistrement des données pour avoir une trace historique telle à documenter, certifier et valider la vie, les modes de travail et les conditions diagnostiques de la tenue mécanique (10, 20).

24. Procédure de contrôle et gestion et d'un dispositif électronique (30) suivant la revendication 1, **caractérisée en ce qu'**elle comprend les étapes séquentielles suivantes, réalisées cycliquement par ledit dispositif électronique (30) de la revendication 1: phase d'allumage (600) effectuée seulement la première fois, phase de vérification validation au fonctionnement (601), phase de détection d'éventuelles anomalies (602) effectuée seulement en cas de vérification positive dans ladite phase (601), phase de vérification de la demande du contrôle de l'intégrité (603) effectuée seulement en cas d'absence totale d'anomalie rencontrée dans ladite phase (602), phase de réglage de la pression (604) effectuée seulement en cas de vérification négative dans ladite phase (603), phase de vérification de la nécessité du fluxage (605), phase de réglage du débit (606) by-passée en cas de vérification négative dans ladite phase (605), phase de décompte des heures de fonctionnement (607), phase d'affichage et d'enregistrement des données (608), phase d'interfaçage avec d'éventuels autres systèmes (609).

25. Procédure de contrôle et gestion selon la revendication 24, **caractérisé en ce qu'**elle comprend les étapes séquentielles suivantes, réalisées cycliquement seulement en cas de vérification négative dans ladite phase (601): phase de vérification de demande de modification de la configuration (612), phase de re-configuration du système (613) by-passée en cas de vérification négative dans ladite phase (612), phase de reset des commandes (614), ladite phase d'affichage et d'enregistrement des données (608), ladite phase d'interfaçage avec d'éventuels autres systèmes (609).

26. Procédure de contrôle et gestion selon la revendication 24, **caractérisé en ce qu'**elle comprend les étapes séquentielles suivantes, réalisées cycliquement seulement en cas de vérification positive dans ladite phase (603): phase de contrôle de l'intégrité (610), phase de gestion des alarmes (611) by passée si aucune alarme n'est relevée dans ladite phase (610), ladite phase de décompte des heures de fonctionnement (607), ladite phase d'affichage et d'enregistrement des données (608), ladite phase d'interfaçage avec d'éventuels autres systèmes (609).

27. Procédure de contrôle et gestion selon la revendication 24, **caractérisé en ce qu'**elle comprend les étapes séquentielles suivantes, réalisées cycliquement seulement en cas d'anomalies relevées dans ladite phase (602): phase de gestion des alarmes (611), ladite phase de décompte des heures de fonctionnement (607), ladite phase d'affichage et d'enregistrement des données (608), ladite phase d'interfaçage avec d'éventuels autres systèmes (609).
